# EUROPÄISCHE PATENTANMELDUNG

(11) **EP 3 437 448 A1**
(43) Veröffentlichungstag der Anmeldung: **06.02.2019**
(21) Anmeldenummer: 18401065.0
(22) Anmeldetag: 25.07.2018
(51) Int. Cl.: A01B 61/04

(54) **AUFHÄNGUNGSVORRICHTUNG**

(30) Priorität: 02.08.2017 DE 102017117481
(71) Anmelder: Amazonen-Werke H. Dreyer GmbH & Co. KG, 49205 Hasbergen (DE)
(72) Erfinder: Scherf, Silvio, 39444 Hecklingen OT Cochstedt (DE); Köhler, Marcus, 06231 Tollwitz (DE)

(57) **Zusammenfassung**

Aufhängungsvorrichtung an einer Landmaschine zur Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper unter den davon umgriffenen Abschnitt des Schwenkarmträgers zumindest ein elastisches, längliches Lagerelement vorgesehen ist, das sich mit seiner Längsachse im Wesentlichen parallel zu der Schwenkachse des Schwenkarmes und der Längsachse des Schwenkträgers erstreckt und durch Schwenkbewegungen des Schwenkarmes eine zumindest teilweise Verformung erfährt, wobei auf der Oberfläche des elastischen Lagerelementes im Bereich der Stirnflächen jeweils eine Erhebung angeordnet ist. Um eine zerstörungsfreie Gestaltung eines elastischen Lagerelementes zu schaffen, welche nicht seitlich aus der Lagerung wandert und zur Aufnahme großer Kräfte geeignet ist, ist vorgesehen, dass die Erhebung auf der dem Schwenkarmträger abgewandten Fläche bzw. den dem Schwenkarmträger abgewandten Flächen des einseitig abgeflachten, elastischen Lagerelementes gegenüber der abgeflachten Seite angeordnet ist.

## Beschreibung

Die Erfindung betrifft eine Aufhängungsvorrichtung gemäß dem Oberbegriff des Patentanspruches 1.

Eine derartige Aufhängungsvorrichtung ist in DE 10 2006 033 119 A1 beschrieben. Bei dieser Aufhängungsvorrichtung sind die elastischen und länglichen Lagerelemente in ihrem Querschnitt rund ausgeführt und an den eingeschnürten Endbereichen gegenüberliegend mit Verbindungselementen versehen. Diese Ausführung soll durch eine erhöhte Federkraft im seitlichen Bereich dem Herauswandern aus der Lagerung entgegenwirken und mit Hilfe der formschlüssigen Verbindungselemente zusätzlich die Montage erleichtern.

Das Kraftaufnahmevermögen runder Lagerelemente ist beschränkt, wodurch auch die Sicherung gegen seitliches Wandern beeinflusst wird, da die Federkraft aus der Kraftaufnahme resultiert. Die formschlüssigen Verbindungselemente neigen zudem zum Reißen bei einer Schwenkbewegung des Schwenkarms um die Längsachse des Querbalkens.

Der Erfindung liegt die Aufgabe zu Grunde, eine zerstörungsfrei arbeitende Gestaltung eines elastischen Lagerelementes zu schaffen, welche nicht seitlich aus der Lagerung wandert und zur Aufnahme großer Kräfte geeignet ist.

Diese Aufgabe wird erfindungsgemäß dadurch gelöst, dass die Erhebung auf der dem Schwenkarmträger abgewandten Fläche bzw. den dem Schwenkarmträger abgewandten Flächen des einseitig abgeflachten, elastischen Lagerelementes gegenüber der abgeflachten Seite angeordnet ist. Infolge dieser Maßnahme ist der Querschnitt des elastischen Lagerelementes derart gestaltet, dass das Kraftaufnahmevermögen und somit die Sicherung gegen seitliches Wandern, basierend auf erhöhter Reibung, gesteigert ist. Zudem bildet die Erhebung durch Anlage an den Lagerkörper eine kraftschlüssige Sicherung, die nicht durch Schwenkbewegungen des Schwenkarms zerstört werden. In einfacher Weise wird die erfindungsgemäße Erhebung an den Stirnflächen des jeweiligen Lagerelementes dadurch geschaffen, dass der freie Bereich der Erhebung dem Konturverlauf der Fläche bzw. den Flächen, auf der bzw. denen er angeordnet ist, zumindest annährend folgt und der dem Schwenkarmträger abgewandte freie Bereich die Kontur der Lagerkörper im Ansatzbereich der Erhebung aufweist. So wird erreicht, dass die Lagerelemente an beiden Seiten mit der Erhebung am Lagerkörper anliegen und somit eine weitere Sicherung gegen seitliches Wandern bilden. Zusätzlich bildet diese Erhebung eine Montagehilfe, da die Zuordnung der Flächen beim Zusammenbau erleichtert wird.

Eine Ausführungsform sieht vor, dass die Erhebung durch zumindest einen aufrechten Steg gebildet wird, dessen Länge weniger als die Hälfte der Länge des Umfanges der Stirnfläche beträgt. Durch diese Maßnahme wird die Erhebung auf den für ihre Funktion notwendigen Bauraum beschränkt und verhindert, dass die Anlagefläche zwischen elastischem Lagerelement und Schwenkarmträger negativ beeinflusst wird durch eine Unebenheit.

Weitere Aufführungsformen sehen vor, dass das Lagerelement einen Querschnitt aufweist, der
- rund und einseitig abgeflacht ist, oder
- ein Dreieck mit einem rechten Winkel bildet, oder
- im unteren Bereich rechteckförmig, woran sich direkt ein dreieckförmiges Dach anschließt, ausgebildet ist.

Hierdurch wird erreicht, dass der Querschnitt des Lagerelementes an den Freiraum zwischen dem Lagerkörper und dem Schwenkarmträger angepasst ausgebildet ist.

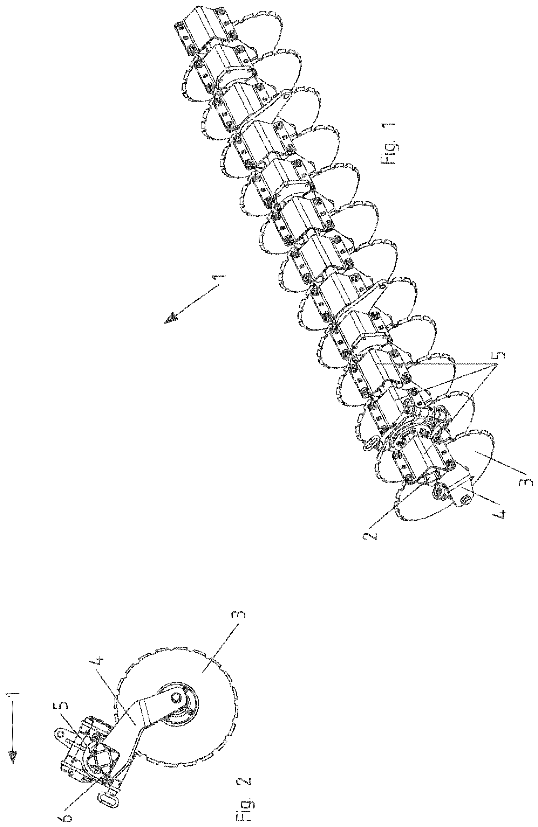

Weitere Einzelheiten der Erfindung sind der Beispielsbeschreibung und den Zeichnungen zu entnehmen. Die Zeichnungen zeigen
- Fig.1: die an einem Schwenkarmträger mittels der Aufhängungsvorrichtungen angeordneten als Scheiben ausgebildeten Bodenbearbeitungswerkzeuge einer Scheibenegge in perspektivischer Darstellung,
- Fig.2: die an einem Schwenkarmträger mittels der Aufhängungsvorrichtungen angeordneten als Scheiben ausgebildeten Bodenbearbeitungswerkzeuge einer Scheibenegge gemäß Fig. 1 in Seitenansicht,

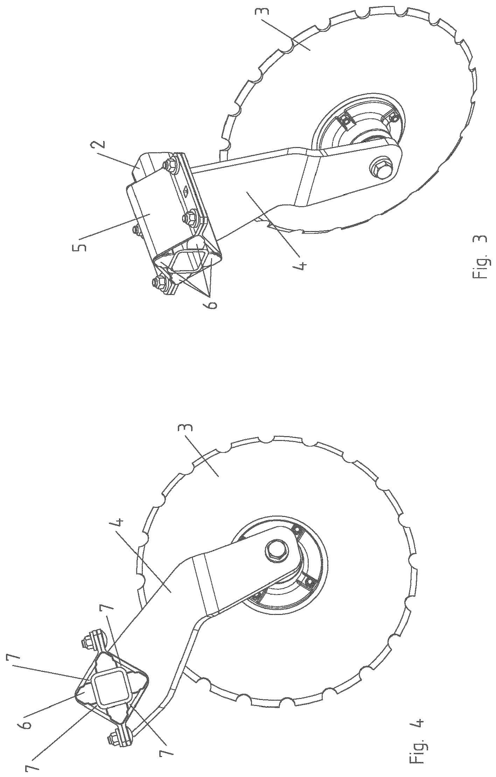

- Fig.3: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab,
- Fig.4: das an einem Schwenkarmträger mittels einer Aufhängungsvorrichtung angeordnete und als Scheibe ausgebildete Bodenbearbeitungswerkzeug einer Scheibenegge in Seitenansicht gemäß Fig. 3,
- Fig.5: die an einem Schwenkarmträger anzuordnenden halben Lagerkörper gemäß den Fig. 1 bis Fig. 4 mit vier elastischen Lagerelementen in perspektivischer und in auseinander geklappter Darstellung,
- Fig.6: die an einem Schwenkarmträger anzuordnenden halben Lagerkörper gemäß Fig. 5 mit vier elastischen Lagerelementen in zusammengesetzter Darstellung,
- Fig.7: ein elastisches Lagerelement gemäß der Fig. 5 und Fig. 6 in Vorderansicht,
- Fig.8: ein elastisches Lagerelement gemäß der Fig. 7 in Schnittansicht,
- Fig.9: das elastische Lagerelement gemäß der Fig. 7 in perspektivischer Darstellung,
- Fig.10: das elastisches Lagerelement gemäß der Fig. 7 in Seitenansicht,

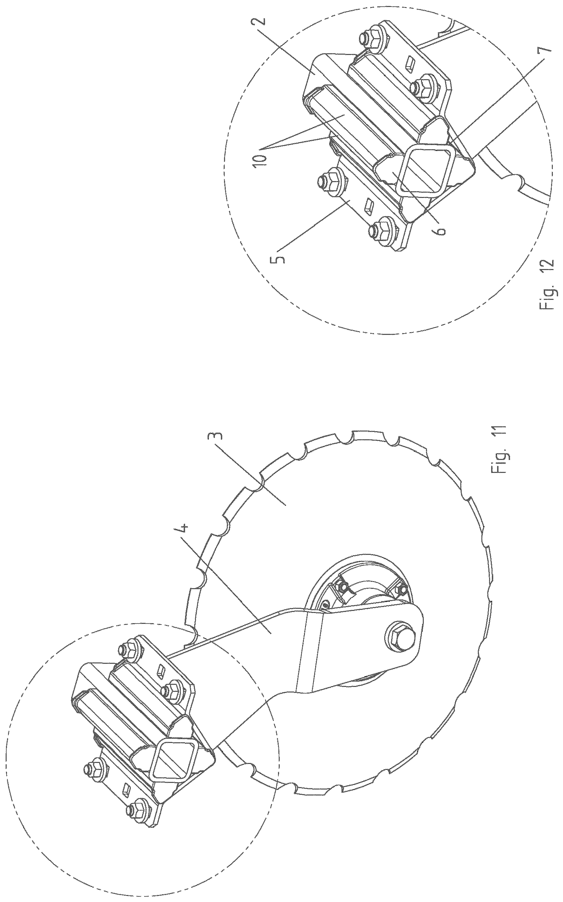

- Fig.11: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab gemäß Fig. 3 ohne die obere Lagerkörperhälfte und
- Fig.12: Aufhängungsvorrichtung ohne die obere Lagerkörperhälfte gemäß Fig. 11 in Detailansicht.

An einem nicht dargestellten Rahmen einer als Kurzscheibenegge ausgebildeten Landmaschine sind zwei quer zur Fahrtrichtung 1 verlaufende Schwenkarmträger 2, von denen jedoch nur einer dargestellt ist, beabstandet hintereinander angeordnet. Der als Schwenkarmträger 2 ausgebildete Querbalken zur Aufhängung jeweils eines Maschinenteils, welches als Scheibe 3 ausgestaltetes Bodenbearbeitungswerkzeug ausgebildet ist, ist mittels geeigneter Zwischenelemente, die hier nicht abgebildet sind, an dem Maschinenrahmen angeordnet. Das als Scheibe 3 ausgebildete Bodenbearbeitungswerkzeug ist jeweils mittels eines Schwenkarmes 4 über einen Lagerkörper 5 an dem Schwenkarmträger 2 befestigt. Der Lagerkörper 5 umgreift den Querbalken 2. Zwischen dem Lagerkörper 5 und dem davon umgriffenen Abschnitt des Querbalkens 2 sind vier elastische Lagerelemente 6 angeordnet. Die elastischen Lagerelemente 6 sind beispielsweise als dicke gummischnurartige langgestreckte Wülste ausgebildet und erstrecken sich mit ihrer Längsachse parallel zu der Schwenkachse des Schwenkarmes 4 und der Längsachse des Querbalkens 2. Der Schwenkarm 4 mit dem Bodenbearbeitungswerkzeug 3 und dem Lagerkörper 5 können aufgrund der elastischen Lagerelemente 6 um die Längsachse des Querbalkens 2 gegen die Kraft der Lagerelementes 6, welche durch die Verformung der elastischen Lagerelemente 6 entsteht, schwenken.

Außerdem kann der Schwenkarm 4 mit dem Bodenbearbeitungswerkzeug 3 im begrenzten Umfang ebenfalls durch elastische Verformung der elastischen Lagerelemente 6 seitlich ausweichen. Die Lagerkörper 5, welche den Schwenkarmträger 2 umgreifen, weisen einen vierkantförmigen Querschnitt auf. Ebenfalls weist der Schwenkarmträger 2 ein vierkantförmigen Querschnitt auf, wobei der Lagerkörper gegenüber dem Profil der Schwenkarmträger 2, in der Ausgangsstellung, um 45° verdreht ist, so dass sich der Zwischenraum zwischen dem Lagerkörper 5 und dem davon umgriffenen Schwenkarmträger 2 in vier Lagerelementekammern 7 untergliedert. In diesen vier Lagerelementekammern 7 ist jeweils ein elastisches Lagerelement 6 angeordnet.

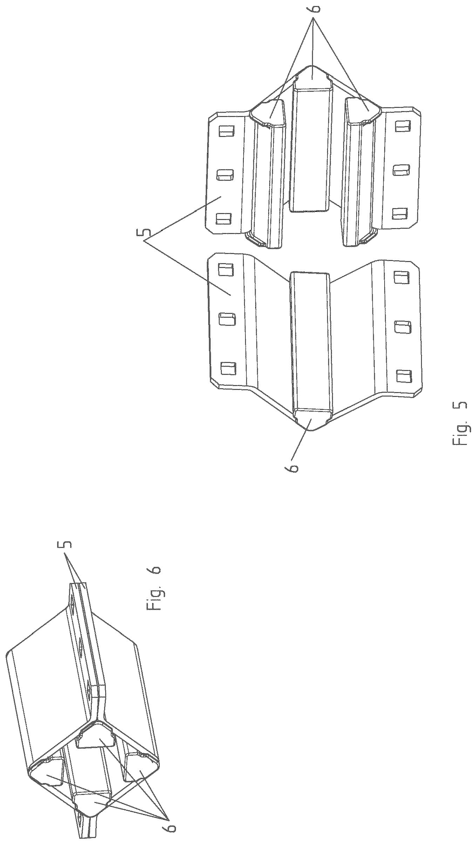

Gemäß den Fig. 5 bis Fig. 10 weisen die Lagerelemente 6 einen fünfeckförmigen Querschnitt mit abgerundeten Eckbereichen auf. Der Radius 8 ist dabei größer als Radius 9 und der Querschnitt setzt sich zusammen aus einem rechtwinkligen Dreieck und einer Rechteckform.

An beiden Stirnflächen 13 des Lagerelementes 6 ist jeweils eine aus den Flächen 10 herausragende Erhebung ausgebildet, die jeweils zwei Stege 11 formt. Diese Erhebung liegt auf der dem Schwenkarmträger 2 abgewandten Seite, gegenüber der abgeflachten Seite des Lagerelementes 6. Die Stege 11 folgen dem Konturverlauf der Fläche 10 und sind winkelförmig zueinander angeordnet. Ihre Verbindung ist als freier Bereich 12 ausgestaltet, der ebenfalls dem Konturverlauf der Flächen 10 folgt. Im Ansatzbereich der Erhebung weist der dem Schwenkarmträger 2 abgewandte freie Bereich 12 zudem die Kontur der Lagerkörper 5 auf.

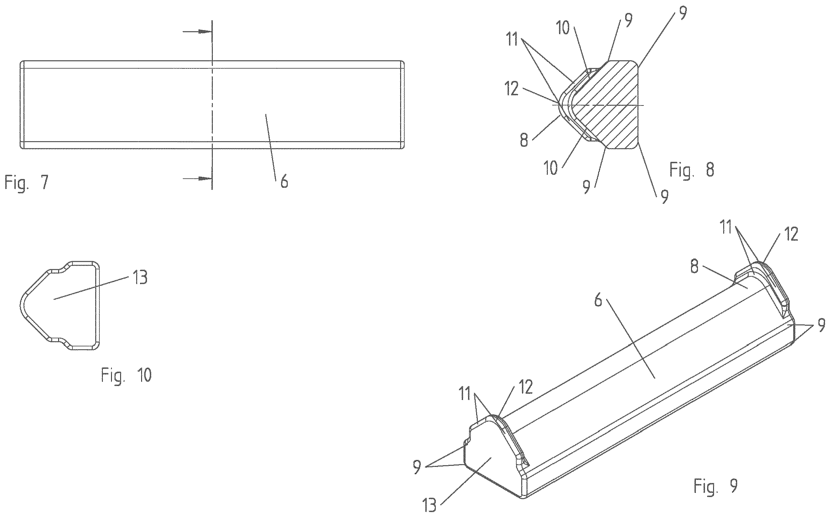

Gemäß Fig. 8 beschränkt sich die Länger der, aus den beiden Stegen 11 gebildete, Erhebung auf weniger als 1/2 der Länge des Umfanges der Stirnfläche 13.

Die Lagerelemente 6 liegen jeweils mit der dem rechten Winkel des Dreiecks gegenüberliegenden ebenen Fläche am Schwenkarmträger 2 an. Durch die Anordnung der Flächen 10 im rechten Winkel zueinander oder einen ähnlich geeigneten Querschnitt sind die Lagerelemente 6 den Lagerelementkammern 7 angepasst, ausgebildet.

Für das Lagerelement 6 sind ähnlich geeignete Ausführungen denkbar, die sich dadurch auszeichnen, dass diese einen Querschnitt aufweisen, der
- rund und einseitig abgeflacht ist, oder
- der ein Dreieck mit einem rechten Winkel bildet, oder
- der im unteren Bereich rechteckförmig, woran sich direkt ein dreieckförmiges Dach anschließt, ausgebildet ist.

## Patentansprüche

1. Aufhängungsvorrichtung an einer Landmaschine zur Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper unter den davon umgriffenen Abschnitt des Schwenkarmträgers zumindest ein elastisches, längliches Lagerelement vorgesehen ist, das sich mit seiner Längsachse im Wesentlichen parallel zu der Schwenkachse des Schwenkarmes und der Längsachse des Schwenkträgers erstreckt und durch Schwenkbewegungen des Schwenkarmes eine zumindest teilweise Verformung erfährt, wobei auf der Oberfläche des elastischen Lagerelementes im Bereich der Stirnflächen jeweils eine Erhebung angeordnet ist, **dadurch gekennzeichnet, dass** die Erhebung auf der dem Schwenkarmträger (2) abgewandten Fläche bzw. den dem Schwenkarmträger (2) abgewandten Flächen (10) des einseitig abgeflachten, elastischen Lagerelementes (6) gegenüber der abgeflachten Seite angeordnet ist.

2. Aufhängungsvorrichtung nach Anspruch 1, **dadurch gekennzeichnet, dass** der freie Bereich (12) der Erhebung dem Konturverlauf der Fläche bzw. den Flächen (10), auf der bzw. denen er angeordnet ist, zumindest annährend folgt.

3. Aufhängungsvorrichtung nach Anspruch 2, **dadurch gekennzeichnet, dass** der dem Schwenkarmträger (2) abgewandte freie Bereich (12) die Kontur der Lagerkörper (5) im Ansatzbereich der Erhebung aufweist.

4. Aufhängungsvorrichtung nach zumindest einem der vorstehenden Ansprüche, **dadurch gekennzeichnet, dass** die Erhebung durch zumindest einen aufrechten Steg (11) gebildet wird.

5. Aufhängungsvorrichtung nach zumindest einem der vorstehenden Ansprüche, **dadurch gekennzeichnet, dass** die Länge des Stegs (11) weniger als die Hälfte der Länge des Umfanges der Stirnfläche (13) beträgt.

6. Aufhängungsvorrichtung nach zumindest einem der vorstehenden Ansprüche, **dadurch gekennzeichnet, dass** das Lagerelement (6) einen Querschnitt, der rund und einseitig abgeflacht ist, aufweist.

7. Aufhängungsvorrichtung nach zumindest einem der vorstehenden Ansprüche, **dadurch gekennzeichnet, dass** das Lagerelement (6) einen Querschnitt, der ein Dreieck mit einem rechten Winkel bildet, aufweist.

8. Aufhängungsvorrichtung nach zumindest einem der vorstehenden Ansprüche, **dadurch gekennzeichnet, dass** das Lagerelement (6) einen Querschnitt, der im unteren Bereich rechteckförmig, woran sich direkt ein dreieckförmiges Dach anschließt, ausgebildet ist, aufweist.
